# EUROPÄISCHE PATENTSCHRIFT

(11) **EP 1 245 860 B1**
(45) Veröffentlichungstag und Bekanntmachung des Hinweises auf die Patenterteilung: **22.10.2003**
(21) Anmeldenummer: 01107569.4
(22) Anmeldetag: 27.03.2001
(51) Int. Cl.: F16G 3/16

(54) **Vorrichtung zum Befestigen von Gurtverbindern an Transportgurten**
Device for securing belt fasteners to conveyor belts
Dispositif de fixation d'agrafes de jonction de courroie à des courroies transporteuses

(43) Veröffentlichungstag der Anmeldung: 02.10.2002
(73) Patentinhaber: MATO Maschinen- und Metallwarenfabrik Curt Matthaei GmbH & Co KG, D-63071 Offenbach (DE)
(72) Erfinder: Herold, Wolfgang, 63075 Offenbach/Main (DE)
(74) Vertreter: Quermann, Helmut, Dipl.-Ing.

(56) Entgegenhaltungen:
- DE-A- 4 140 743
- GB-A- 508 624
- US-A- 4 538 755

## Beschreibung

Die Erfindung betrifft eine Vorrichtung zum Befestigen von Gurtverbindern aus in Reihe angeordneten Verbinderklammern auf den Gurtbandenden von Transportguten gemäß Oberbegriff des Anspruchs 1.

Bei dem Befestigen von Gurtverbindern bzw. deren Verbinderklammern auf den Gurtbandenden von Transportgurten besteht ein Problem darin, ein präzises Eindringen der mit ihren Spitzen in die Löcher der oben liegenden Klammerschenkel eingesetzten Befestigungskrampen nach dem Durchdringen des betreffenden Gurtbandendes in die Löcher der im Biegegesenk positionierten unteren Klammerschenkel sicherzustellen. Denn im Zuge der Befestigung der Verbinderklammern werden deren oben liegende Klammerschenkel auf die Bandoberfläche niedergedrückt. Ein präzises aufeinander zu bewegen der Klammerschenkel ist sowohl bei unterschiedlichen Wandstärken, als auch unterschiedlichen Bandelastizitäten sicherzustellen.

Aus diesem Grund wählt man häufig ein hinreichend großes Lochspiel und nimmt insoweit hinsichtlich des Klammersitzes und -haltes eine beeinträchtigte Befestigung der Verbindungsklammern und schließlich der Gurtverbinder in Kauf. Werden statt dessen Verbinderklammern aus relativ starkem Material verwendet vereinfacht sich die Positionierung der Klammerschenkel beim Befestigen der Verbinderklammern und ermöglicht insbesondere ein relativ geringes Lochspiel, allerdings mit dem Nachteil, dass die Umformkräfte beim Anbringen der Gurtverbinder recht hoch sind.

Aus der DE 41 40 743 A1 ist eine Vorrichtung der eingangs genannten Art bekannt, bei der Verbinderklammern aus verhältnismäßig dünnem Blechmaterial Verwendung finden, wobei die Scharnierbögen zur Erhöhung der Beanspruchungs- und Verschleißfestigkeit als aus dem Blechmaterial gefaltete Bögen mit U-förmigen Querschnitt hergestellt sind. Dieses dünne Blechmaterial verlangt Führungslöcher mit einem möglichst geringen Führungsspiel für die Befestigungskrampen, um den einwandfreien Sitz und Halt für die Verbinderklammern und folglich den Gurtverbinder auf den Gurtbandenden zu erreichen. Bei der bekannten Vorrichtung sind diverse Zentriermittel vorgesehen, um unter Berücksichtigung des engen Bewegungsspiels ein einwandfreies Einführen der Befestigungskrampen in die Führungslöcher der unteren Klammerschenkel beim Eintreiben der Befestigungskrampen zu gewährleisten. So weist das Biegegesenk auf der einen Seite, zwischen den die Klammerschenkel der jeweiligen Verbinderklammer verbindenden Scharnierbögen, Zentrierlamellen und auf der anderen Seite in rückseitige V-förmige Ausnehmungen der aufliegenden Klammerschenkel eingreifende Zentrierkeile auf. Zusätzlich ist der Pressenkopf auf seiner Unterseite mit einem Zentrieranschlag für das rückseitige Ende des oberen Klammerschenkels der Verbinderklammern versehen. - Nachteilig ist bei dieser Vorrichtung das komplizierte Zusammenwirken der einzelnen Zentriermittel, die zudem bewirken, dass die Vorrichtung baulich recht aufwendig gestaltet ist. Abgesehen hiervon besitzt bei dieser Vorrichtung der in das Biegegesenk einschiebbare Stab, den die Scharnierbögen der Verbinderklammern umgreifen, keine Zentrierfunktion. Die Vorrichtung läßt sich schließlich nicht auf unterschiedliche Gurtverbindergrößen umrüsten. Sie erlaubt des Weiteren beim anfänglichen Zentrieren des Pressenkopfes auf dem Biegegesenk mittels eines mit dem Pressenkopf verbundenen Zapfens, der in einer Zentrierbohrung des Biegegesenks einsteckbar ist, kein präzises kontaktieren der Verbinderklammern im Kanal des Pressenkopfes.

Es ist Aufgabe der Erfindung eine Vorrichtung der eingangs genannten Art so weiterzubilden, dass mit baulich einfachen Mitteln eine optimale Zentrierung der Gurtverbinder bei deren Befestigung am Gurt erzielt wird.

Gelöst wird die Aufgabe bei einer Vorrichtung der eingangs genannten Art dadurch, dass die Zentrierung der Verbinderklammern durch die Mittel zum Eingriff zwischen den Scharnierbögen sowie durch den Stab derart erfolgt, daß dabei der in das Biegegesenk eingeschobene Stab die Verbinderklammern gegen die zwischen den Scharnierbögen befindlichen Zentriermittel positioniert.

Bei der erfindungsgemäßen Vorrichtung kommt dem Stab somit die Funktion eines die Zentrierung unterstützenden Bauteiles zu. Beim Einschieben des Stabes in die in das Biegegesenk eingelegten Verbinderklammern kontaktiert er die Scharnierbögen der Verbinderklammern und positioniert die Verbinderklammern gegen die zwischen den Scharnierbögen befindlichen Zentriermittel. Gemäß einer besonderen Ausführungsform der Erfindung sind die zwischen den Scharnierbögen angeordneten Zentriermittel als Stifte ausgebildet. Grundsätzlich benötigt die erfindungsgemäße Vorrichtung neben diesen Zentriermitteln - konkret dem Stab und den Stiften - keine weiteren Zentriermittel.

Da gemäß der bevorzugten Ausführungsform die Zentriermittel, die zwischen die Scharnierbögen eingreifen, als Stifte ausgebildet sind, benötigen diese Zentriermittel nur wenig Platz, so dass ausreichend Raum zum Einschieben des Stabes verbleibt. Der Stab stellt eine fixe Umlenkachse für die Verbinderklammern dar, indem die Möglichkeit besteht, diejenigen Klammerschenkel der Verbinderklammern, die über den Stempel und die Verbinderklammern beaufschlagt werden, um diese fixe Achse zu biegen, bis diese Klammerschenkel den Gurt kontaktieren. Auf diese Art und Weise ist sichergestellt, dass die genannten Klammerschenkel definiert gebogen werden, in eine Position, in der die Löcher der korrespondierenden, den Gurt zwischen sich aufnehmenden Klammerschenkel miteinander fluchten.

Gemäß einer besonderen Ausführungsform der Erfindung ist vorgesehen, dass der Stab parallel zur Stabachse verschiebbar im Biegegesenk gelagert ist. Dies ermöglicht es einerseits die Position des Stabes bezüglich der Verbinderklammern, konkret der Scharnierbögen der Verbinderklammern, zu optimieren, so dass der Stab an den Scharnierbögen anliegt und ihm infolge dessen die Funktion eines Zentriermittels zukommt. Andererseits erlaubt es die Verstellbarkeit des Stabes, unterschiedliche Größen von Gurtverbindern in dem selben Biegegesenk zu verarbeiten. Die unterschiedlich großen Gurtverbinder unterscheiden sich insbesondere in der Länge der Klammerschenkel, so dass bei unveränderter Positionierung der Verbinderklammern, bezogen auf das Biegegesenk, nur die Position des Stabes zwecks Anlage an den Scharnierbögen der Verbinderklammern zu ändern ist.

Der Stab ist insbesondere so gelagert, dass er stufenlos parallel verschoben werden kann, die Stellmittel zum Verschieben des Stabes allerdings selbsthemmend sind. Hierdurch ist sichergestellt, dass in jeder Position des Stabes dieser, bei Ausübung von Querkräften auf den Stab, in Richtung der eingeleiteten Querkräfte unverschiebbar ist.

In aller Regel ist es nicht erforderlich, mehr als zwei unterschiedliche parallele Stabpositionen vorzusehen, um mehr als zwei Gurtverbindergrößen positionieren zu können. Zur Positionierung von zwei Gurtverbindergrößen ist vorteilhafterweise vorgesehen, eine axiale Verschiebung der Lagerelemente für den Stab, kombiniert mit einer Schwenkbewegung der Lagerelemente um 180° zu bewerkstelligen. Der Stab kann somit in dieselben Bohrungen der Lagerelemente eingeschoben werden.

Gemäß einer bevorzugten Weiterbildung der Erfindung ist vorgesehen, dass der Stab in fluchtenden Bohrungen von mittels der Stellmittel verschiebbaren Lagerelementen gelagert ist, wobei die Lagerelemente Anschläge für das zwischen die Klammerschenkel der Verbinderklammern eingelegte Gurtbandende aufweisen. Mit der parallelen Verstellung des Stabes geht somit eine entsprechende parallele Verstellung des Anschlages für das jeweils zu bearbeitende Gurtbandende einher.

Gemäß einer besonderen Ausführungsform der Erfindung ist vorgesehen, dass das Biegegesenk Umlenkvertiefungen zum Umlenken der Spitzen der Befestigungskrampen aufweist, wobei die Umlenkvertiefungen flach ausgebildet sind. In Folge dessen baut die Gurtverbindung im Bereich der Verbinderklammern, bezogen auf die Stärke des Transportgurtes, sehr flach. Umformkräfte beim Umlenken der Spitzen der Befestigungskrampen werden auch von den Zentriermitteln aufgenommen. Unter flachen Umlenkvertiefungen werden solche verstanden, die keine größere Tiefe aufweisen als der jeweilige Klammerschenkel, bezogen auf seine Ausdehnung in Richtung der Stärke des Transportgurtes, stark ist. Es ist insbesondere nicht erforderlich, wie aus diversem Stand der Technik bekannt, die Endbereiche der Befestigungskrampen in Richtung der zugeordneten Klammerschenkel zurückzubiegen, so dass diese Endbereiche Löcher in den Klammernschenkeln durchsetzen.

Aufgrund der Zentrierung der Verbinderklammern, durch die erfindungsgemäßen Zentriermittel kann darauf verzichtet werden besondere Zentriermittel im Bereich des Stempels vorzusehen. In so fern wird es als zweckmäßig erachtet, wenn der Stempel eine ebene Stempelfläche aufweist, insbesondere eine unter einem Winkel auf den Befestigungskrampen auftreffende ebene Stempelfläche aufweist. Dieser Winkel beträgt weniger als 10°, wobei der Stempel so orientiert ist, dass er aufgrund der Ausbildung seiner geneigt angeordneten Stempelfläche zunächst auf denjenigen Bereich des jeweiligen Verbindungskrampens auftritt, der dem freien Klammerschenkelende zugewandt ist. Entsprechend sollte auch der mit den Klammerschenkeln in Kontakt gelangende Pressenkopf mit einer geneigten Kontaktfläche versehen sein. In der Konsequenz führt dies dazu, dass beim Auflegen des Pressenkopfes auf die Gurtverbinder bzw. dem Einleiten einer Stempelkraft zunächst die Bereiche der Gurtverbinder beaufschlagt werden, die den Schamierbögen abgewandt sind. Die Hauptpresskräfte werden somit in die Gurtverbinder in großem Abstand zum Stab eingeleitet.

Es wird als besonders vorteilhaft angesehen, wenn der Pressenkopf und das Biegegesenk mittels Zapfen zentrierbar sind, wobei der jeweilige Zapfen federgelagert ist. Aufgrund dieser Ausbildung ist es insbesondere möglich Verbinderklammern zu verwenden, die in ihrer Ausgangsstellung, somit vor dem Zusammenbiegen eher V-förmig statt U-förmig ausgebildet sind. Das Aufsetzen des Pressenkopfes auf die Befestigungskrampen kann entsprechend dem Öffnungswinkel der Klammerschenkel bei geneigt zum Biegegesenk angeordnetem Pressenkopf erfolgen, wobei der Zapfen den Pressenkopf und das Biegegesenk noch nicht zentriert, sondern entgegen der Kraft einer Feder in den Pressenkopf oder das Biegegesenk eingeschoben ist, je nach dem, in welchem dieser Teile er gelagert ist. Erst dann, wenn die Klammerschenkel unter der Einwirkung des Gewichtes des Pressenkopfes oder einer externen in dem Pressenkopf eingeleiteten Kraft weitgehend in ihre U-förmig Gestalt gebogen sind fährt der Zapfen, unter der Kraft der Feder, in das Komplementärbauteil - Pressenkopf oder Biegegesenk - ein und zentriert die Teile.

Weitere Merkmale der Erfindung sind in der Beschreibung der Figuren und in den Figuren selbst dargestellt, wobei bemerkt wir, dass alle Einzelmerkmale und alle Kombinationen von Einzelmerkmalen erfindungswesentlich sind.

In den Figuren ist die Erfindung anhand eines Ausführungsbeispieles dargestellt, ohne hierauf beschränkt zu sein. Es stellt dar:

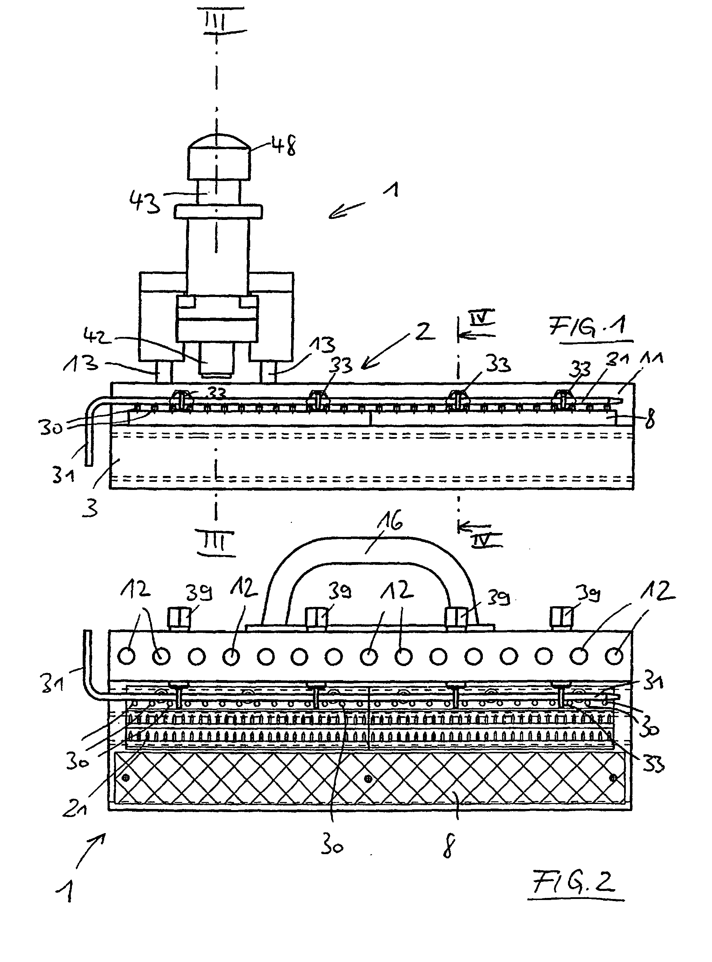

- Fig. 1: eine Frontansicht der erfindungsgemäßen Vorrichtung, ohne eingelegten Transportgurt und ohne eingelegte Gurtverbinder,
- Fig. 2: eine Draufsicht des in der Fig. 1 unter anderem gezeigten Biegegesenks,
- Fig. 3: einen Schnitt durch die in Fig. 1 gezeigte Vorrichtung gemäß der Linie III-III, bei eingelegtem Transportgurt und eingelegten Gurtverbindern, vor dem Verformen der Gurtverbinder,
- Fig. 4: einen Detailschnitt des Bereiches des Biegegesenkes, gemäß der Linie IV-IV in Fig. 1,
- Fig. 5: eine Detailansicht V gemäß Figur 4 des Biegegesenkes,
- Fig. 6: eine Schnittdarstellung der Vorrichtung gemäß der Darstellung in Fig. 3, bei zusammengebogenen Klammerschenkeln, vor dem Durchdrücken der Befestigungskrampen,
- Fig. 7: einen Schnitt gemäß Fig. 6, beim teilweisen Durchdrücken der Befestigungskrampen und
- Fig. 8: eine Schnittdarstellung gemäß der Fig. 6 und 7, nach Beendigung des Befestigungsvorganges.

Die erfindungsgemäße Vorrichtung zum Befestigen von Gurtverbindern an Transportgurten besteht im wesentlichen aus den beiden Bauteilanordnungen Pressenkopf 1 und Biegegesenk 2.

Das Biegegesenk 2 weist einen hohlen Grundkörper 3 mit recht-eckigem Querschnitt auf. Eine den eigentlichen Biegevorgang vollführende Biegegesenkplatte 4 ist oben auf dem Grundkörper 3 positioniert und mittels einer Vielzahl in der Biegegesenkplatte 4 versenkter Schrauben 5 mit dem Grundkörper 3 verbunden, in dem diese Schrauben Bohrungen in der oberen Wandung des Grundkörpers 3 durchsetzen und in innerhalb des Grundkörpers 3 angeordnete Muttern 6 eingeschraubt sind. Um die beim Biegevorgang in den Grundkörper 3 eingeleiteten Kräfte abzufangen, ist in den Grundkörper 3 ein Zwischenkörper 7 eingesetzt und dort fixiert, der an der oberen und unteren Wandung des Grundkörpers 3 anliegt. Die Biegegesenkplatte 4 weist eine Breite auf, die etwa der Hälfte der Breite des Grundkörpers 3 entspricht. Neben der Biegegesenkplatte 4 ist im Bereich der anderen Hälfte des Grundkörpers 3 eine Unterlage 8 plaziert, die der Auflage des Gurtendes 9 des Transportgurtes 10 dient. Mit der der Biegegesenkplatte 4 zugewandten Seitenwand des Grundkörpers 3 ist ein quaderförmiges Lagerteil 11 verbunden, das mit einer Vielzahl senkrecht zur oberen Wandung des Grundkörpers 3 orientierten Durchgangsbohrungen 12 versehen ist. Jeweils zwei Durchgangsbohrungen 12 im Abstand von vier Durchgangsbohrungen 12 dienen der Aufnahme zweier Zentrierzapfen 13 des Pressenkopfes 1. Die Befestigung des Lagerteils 11 am Grundkörper 2 erfolgt mittels mehrerer Schrauben 15, die in Muttern 14 eingeschraubt sind. Im zentralen Bereich, bezogen auf die Längserstreckung des Lagerteils 11, ist ein Handgriff 16 mit das Lagerteil 11 durchsetzenden Schraubenbolzen verbunden, die mit den Muttern 14 verschraubt sind. Durch Ergreifen des Handgriffes 16 kann das Biegegesenk 2, gegebenenfalls auch der mit diesem verbundene Pressenkopf 1, transportiert werden.

Die sich in Längsrichtung des Grundkörpers 3 erstreckende Biegegesenkplatte 4 weist auf ihrer, dem Grundkörper 3 abgewandten Seite eine ebene Auflagefläche für die unteren Klammerschenkel 18 der Verbinderklammern 19 des Gurtverbinders 20 auf. Die ebene Auflagefläche 17 ist mit flach ausgebilderten Umlenkvertiefungen 21 zum Umlenken der beim Befestigen der Gurtverbinder durchgetriebenen Befestigungskrampen 22 versehen. Diese besitzen parallele, im Bereich ihrer freien Enden angespitze Schenkel 23 und einen diese verbindenden, im rechten Winkel zu diesem angeordneten Steg 24. Die Gurtverbinder 20 weisen, bezogen auf ihren Ausgangszustand vor dem Anbringen an den Transportgurten, V-förmig angeordnete Klammerschenkel auf, somit untere Klammerschenkel 18 und obere Klammerschenkel 25, die mittels Scharnierbögen 26 verbunden sind. Um die Verbinderklammern definiert zueinander zu positionieren, insbesondere in exaktem parallelen Abstand zueinander, sind zwei Stäbe 27 vorgesehen, die die Oberseite der unteren Klammerschenkel 18 kontaktieren und mit diesen verschweißt sind.

Jeder Klammerschenkel 18 bzw. 25 weist zwei oder vier Löcher 28 bzw. 29 auf, je nach dem ob der jeweilige Klammerschenkel der Aufnahme eines oder zweier Befestigungskrampen 22 dient. Der jeweilige Befestigungskrampen 22 ist, bezogen auf die Ausgangsstellung der Gurtverbinder, in die Löcher 29 des oberen Klammerschenkels 25 eingesteckt, wobei die Spitzen der Schenkel 23 des Befestigungskrampens 22 geringfügig über die untere Fläche des oberen Klammerschenkels 25 hinaus stehen. Beim Anbringen der Gurtverbinder 20 am Transportgurt 10, welches nachstehend noch näher erläutert wird, wird der jeweilige Befestigungskrampen 22 in Richtung des unteren Klammerschenkels 18 vorgestoßen, wobei der Befestigungskrampen 22 mit den vorlaufenden spitzen Bereichen der Schenkel 23 in die Löcher 28 des unteren Klammerschenkels 18 eingeführt wird und beim weiteren Durchdrücken des Befestigungskrampens 22 dessen vorlaufende Schenkelabschnitte 23 die Biegegesenkplatte 4 kontaktieren und im Bereich der Umlenkvertiefungen 21 in Richtung des Lagerteiles 11 umgebogen werden.

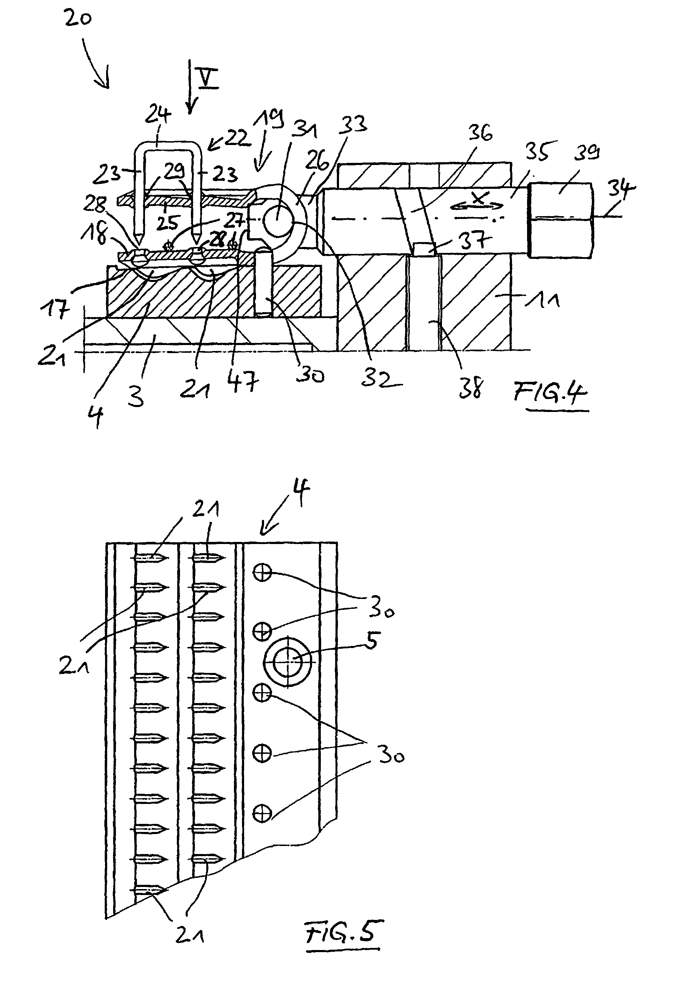

Um die Gurtverbinder beim Befestigen an dem Transportgurt definiert zu positionieren sind Zentriermittel vorgesehen. Zentrierstifte 30 sind in Bohrungen der Biegegesenkplatte 4 eingesteckt. Die Zentrierstifte 30 sind parallel zur Durchgangsbohrung 12 im Lagerteil 11 angeordnet, wobei eine Vielzahl von Zentrierstiften 30, in Längsrichtung der Biegegesenkplatte 4 positioniert sind. Der jeweilige Zentrierstift 30 ragt soweit über die ebene Auflagefläche 17 der Biegegesenkplatte hinaus, dass er etwa mit der oberen Kontur des unteren Klammerschenkels 18, bei auf die Biegegesenkplatte 4 aufgelegter Verbinderklammer 19, übereinstimmt. Weist die jeweilige Verbinderklammer 19 zwei parallel zueinander angeordnete, identische, die beiden Klammerschenkel 18 und 25 verbindende Scharnierbögen 26 auf, greift der jeweilige Stift 30 zwischen die Scharnierbögen 26 dieser Verbinderklammern 19 ein, und zwar, wie in der Darstellung der Fig. 4 ist, in dem Bereich, in dem die Scharnierbögen 26 in den unteren Klammerschenkel 18 münden. Grundsätzlich könnte der jeweilige Griff 30 auch zwischen benachbarte Verbinderklammern 19 eingreifen, wenn diese nur einen Scharnierbogen 26 aufweist. Als weiteres Zentriermittel ist ein Zentrierstab 31 vorgesehen, der dic Verbinderklammern 19 im inneren Scheitelpunkt 32 der Scharnierbögen 26 kontaktiert. Der Zentrierstab 31 ist mit geringem Spiel in fluchtende Bohrungen von Lagerelementen 33 eingesteckt, die um eine Achse 34 frei drehbar, aber axial festgelegt in einem zylindrischen Stellmittel 35 gehalten sind. Das jeweilige Stellmittel 35 durchsetzt eine Bohrung im Lagerteil 11 und ist außen mit einer Steigungsnut 36 versehen. In diese greift ein Ansatz 37 eines im Lagerteil 11 gelagerten Bolzens 38 ein. Auf der dem jeweiligen Lageelement 33 abgewandten Seite des Stellmittels 35 ist mit diesem ein Stellknopf 39 drehfest verbunden. Beim Schwenken des Stellknopfes 39 wird das Stellmittel 35 und damit das Lagerelement 33, je nach vorgegebener Drehrichtung, in Richtung des Doppelpfeiles X axial bewegt. Mittels der diversen, vorliegend vier Stellmittel 35 kann der Zentrierstab 31 somit parallel verschoben werden. Es ist im Sinne der Erfindung nicht erforderlich, dass das jeweilige Lagerelement 33 und das zugeordnete zylindrische Stellmittel 35 zwei Bauteile bilden. Bilden diese Bauelemente eine Baueinheit, kann diese, bei entnommenem Zentrierstab 31, um 180° verschwenkt werden, so dass in der dann um ein definiertes Maß axial verschobenen Position des Bauteiles der Zentrierstab 31 durch die Lagerelementabschnitte 33 gesteckt werden können. Sind die Stellknöpfe 39 als Muttern ausgebildet, kann eindeutig an der jeweils oberen Fläche der Stellknöpfe 39 abgelesen werden, in welcher parallel verschobenen Position der beiden möglichen Positionen sich der Stab 31 befindet und damit für welche Gurtverbindergröße die Vorrichtung eingestellt ist.

Der Pressenkopf ist mit einem Handgriff 40 versehen. Der Pressenkopf 1 weist eine dickwandige Pressenkopfhülse 42 mit Führungskanal 41 auf. Im Führungskanal 41 ist ein niederdrückbarer Stempel 43 geführt, der nicht drehbar im Pressenkopf 1 gelagert ist. Die vorlaufende Stempelfläche 44 und auch die vorlaufende Fläche 45 der Pressenkopfhülse 42 sind, bezogen auf die Bewegungsachse des Stempels 35, unter einem Winkel > 90°, bis zu 100°, angeordnet, derart, dass derjenige Stempelbereich bzw. derjenige Bereich der Pressenkopfhülse 42, der dem dem Scharnierbogen 26 abgewandten Schenkel 23 des Befestigungskrampen 22 zugewandt ist, vorlaufend ist. Der jeweilige Befestigungskrampen 22 ist im Bereich seiner beiden Schenkel 23, zumindest auf die Längserstreckung des Steges 24 bezogen, im Führungskanal 41 geführt.

Die beiden Zentrierzapfen 13 sind im Pressenkopf 1 axial verschieblich gelagert, und zwar gegen die Kraft von Druckfedern 46.

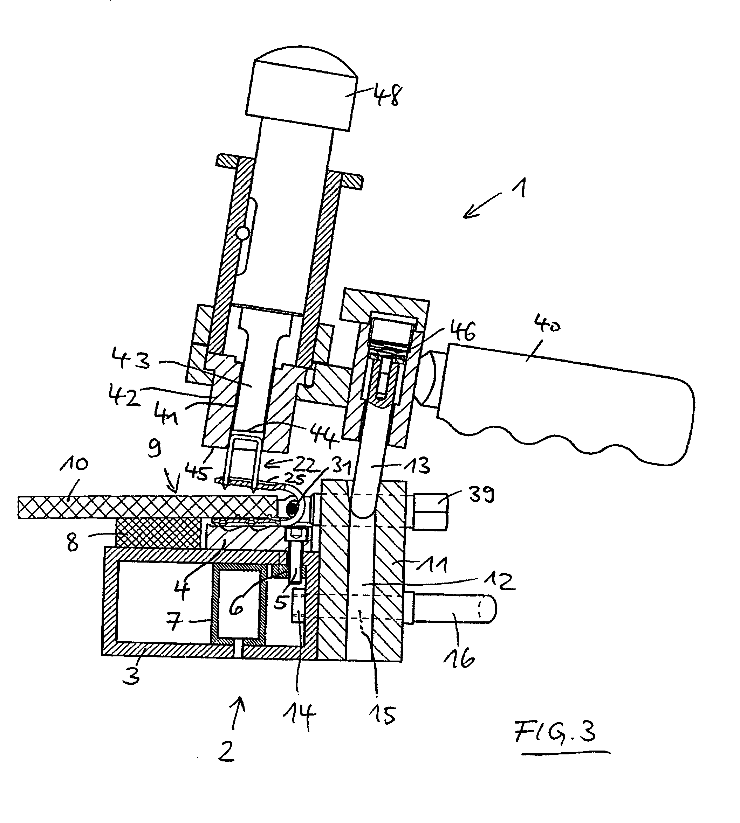

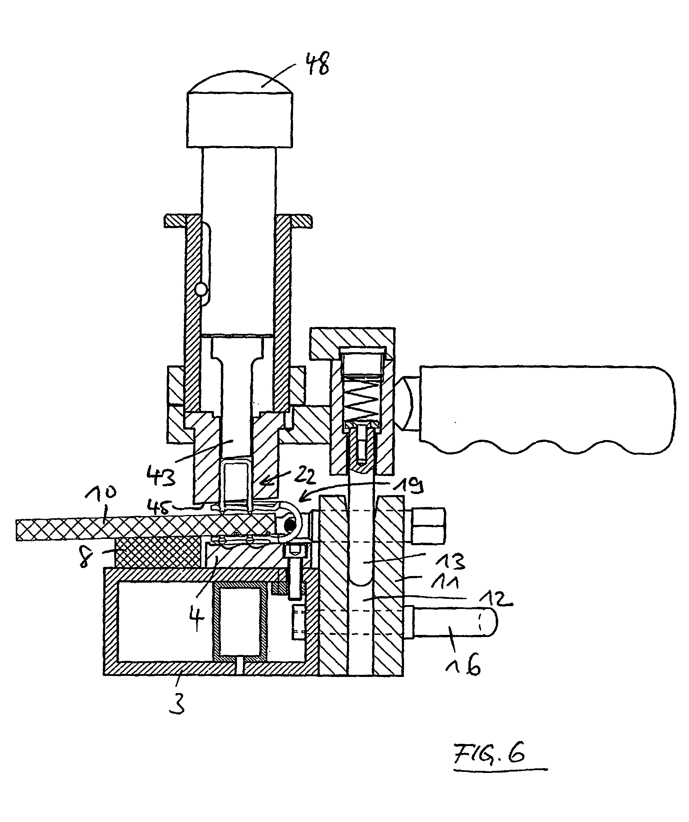

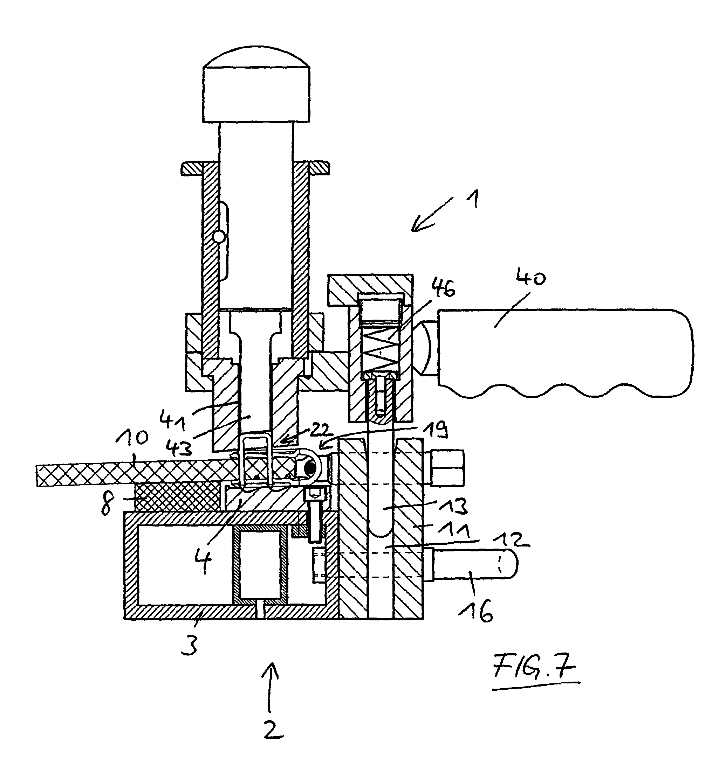

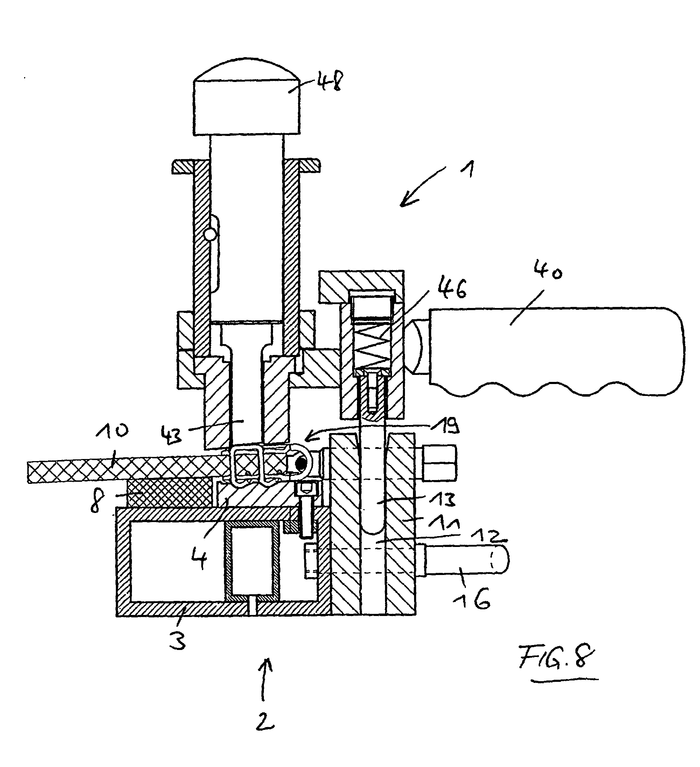

Um die aus in Reihe angeordneten Verbinderklammern 29 gebildeten Gurtverbinder 20 an dem Gurtende des Transportgurtes 10 zu befestigen, werden zunächst die Gurtverbinder 20 auf die Biegegesenkplatte 4 aufgelegt und im Bereich der unteren Klammerschenkel 18 gegen die Zentrierstifte 30 positioniert. Nach Vorpositionierung der Stellmittel 35 wird der Zentrierstab 31 durch die Bohrungen der Lageelemente 33 gesteckt oder aber es wird der Zentrierstab 31 zunächst durch die Bohrungen der Lagerelemente 33 gesteckt und dann der Zentrierstab 31 parallel in seine Zentrierposition verschoben, in der er im Bereich des Scheitelpunktes 32 an den Scharnierbögen 26 der Verbinderklammern 19 anliegt. Es wird dann der Transportgurt 10 mit seinem Gurtende 9 auf die Unterlage 8 und zwischen die V-förmig gespreizten Klammerschenkel 18 und 25 der Verbinderklammern 19 gelegt, wobei die stirnseitige Fläche des Transportgutes 10 die Anschlagflächen 47 der Lagerelemente 33 kontaktiert. In dieser Ausgangsposition, die in Fig. 3 veranschaulicht ist, wird der Pressenkopf 1 auf das Biegegesenk 2 aufgesetzt, wobei, wegen der aus der lotrechten geringfügig abgeknickten Aufsetzposition, die beiden Zentrierzapfen 13 maximal in den Pressenkopf 1 eingefahren sind. Aufgrund des Gewichtes des Pressenkopfes 1 wird bei dessen Aufsetzen auf das Biegegesenk 2 der jeweilige obere Klammerschenkel 25 der Verbindungsklammer 19 nach unter gegen den Gurt 10 gedrückt, wobei der Stempel 43 nach oben ausweicht. Aufgrund der hierbei vonstatten gehenden geringfügigen Kippbewegung des Pressenkopfes 1 relativ zum Biegegesenk 2 gelangen die Zentrierzapfen 13 in fluchtende Stellung zu den Durchgangsbohrungen 12 des Biegegesenkes 2, so dass die Zentrierzapfen 13, unter Einwirkung der Druckfedern 46, aus dem Pressenkopf aus- und damit vollständig in das Biegegesenk 2 einfahren. Diese Gesamtsituation ist in Fig. 6 veranschaulicht. Anschließend wird der oben aus dem Pressenkopf 1 ragende, erweiterte Abschnitt 48 des Stempels 43 durch Einwirken eines Hammers beaufschlagt und hierbei der Stempel 43 nach unten getrieben. In zuvor beschriebenem Sinne wird der jeweilige Befestigungskrampen 22 mittels des Stempels 43 durch den Transportgurt 10 und den unteren Klammerschenkel 18 der Verbinderklammer 19 getrieben und in der Biegegesenkplatte 4 in Richtung des Scharnierbogens 26 der Verbinderklammer 19 umgebogen. Ein Zwischenschritt des Verbindungsvorganges ist in Fig. 7, der beendete Verbindungsvorganges in Fig. 8 veranschaulicht. Die schrägen Flächen von Stempel 43 und Pressenkopfhülse 42 verhindern bei dem Verbindungsvorgang, dass sich die Klammerschenkel in Richtung ihrer freien Enden wegbewegen.

Beim Beaufschlagen des Pressenkopfes 1 erfolgt jeweils nur die Verbindung weniger, beispielsweise einer oder zweier Verbinderklammern 19 mit dem Transportgurt 10. Nach dem Verbinden wird der Pressenkopf 1 von Biegegesenk 2 entnommen und seitlich zu der bzw. den nächsten, zu verbindenden Verbinderklammern 19 versetzt, d.h., um die gewollte Anzahl Durchgangsbohrungen 12 seitlich versetzt. Es erfolgt dann erneut der zu den Fig. 3 und 6 bis 8 beschriebene Vorgang.

## Patentansprüche

1. Vorrichtung zum Befestigen von Gurtverbindern (20) aus in Reihe angeordneten Verbinderklammern (19) auf den Gurtbandenden (9) von Transportgurten (10), mit einem Biegegesenk (2) und einem auf diesem zentrierbaren Pressenkopf (1) mit einem Kanal (41) mit einem in Richtung des Biegegesenks (2) niederdrückbaren Stempel (43), wobei mittels des Stempels (43) Befestigungskrampen (22) durch fluchtende Löcher (28, 29) in Klammerschenkeln (18, 25) der Verbinderklammern (19) hindurch und unter Durchdringung des zwischen den Klammerschenkeln (18, 25) eingeschobenen Gurtbandendes (9) eintreibbar sind derart, daß die Spitzen der Befestigungskrampen (22) in dem Biegegesenk (2) umgebogen werden, wobei das Biegegesenk (2) Mittel (30 ) zum Zentrieren der Verbinderklammern (19) aufweist derart, daß die Mittel (30) zwischen die die Klammerschenkel (18, 25) verbindenden Scharnierbögen (26) der Verbinderklammern (19) eingreifen, sowie im Biegegesenk (2) ein in dieses einschiebbarer Stab (31) gelagert ist, so daß diesen die Scharnierbögen (26) der Verbinderklammern (19) umgreifen, **dadurch gekennzeichnet, dass** die Zentrierung der Verbinderklammern (19) durch die Mittel (30) zum Eingriff zwischen den Scharnierbögen (26) sowie durch den Stab (31) derart erfolgt, daß dabei der in das Biegegesenk (2) eingeschobene Stab (31) die Verbinderklammern (19) gegen die zwischen den Scharnierbögen (26) befindlichen Zentriermittel (30) positioniert.

2. Vorrichtung nach Anspruch 1, **dadurch gekennzeichnet, dass** die Mittel (30), die zwischen die Scharnierbögen (26) eingreifen, als Stifte (30) ausgebildet sind.

3. Vorrichtung nach Anspruch 1 oder 2, **dadurch gekennzeichnet, dass** der Stab (31) parallel zur Stabachse verschiebbar im Biegegesenk (2) gelagert ist.

4. Vorrichtung nach Anspruch 3, **dadurch gekennzeichnet, dass** Stellmittel (35) zum Verschieben des Stabes (31) relativ zum Biegegesenk (2) vorgesehen sind.

5. Vorrichtung nach Anspruch 4, **dadurch gekennzeichnet, dass** der Stab (31) in fluchtende Bohrungen von mittels der Stellmittel (35) verschiebbaren Lagerelementen (33) gehalten ist, wobei die Lagerelemente (33) Anschläge (47) für das zwischen die Klammerschenkel (18, 25) der Verbinderklammern (19) eingelegte Gurtbandende (9) aufweisen.

6. Vorrichtung nach einem der Ansprüche 1 bis 5, **dadurch gekennzeichnet, dass** der Stab (31) die Verbinderklammern (19) im Scheitelpunkt (32) der Scharnierbögen (26) kontaktiert.

7. Vorrichtung nach einem der Ansprüche 1 bis 6, **dadurch gekennzeichnet, dass** das Biegegesenk (2, 4) Umlenkvertiefungen (21) zum Umlenken der Spitzenbereiche der Befestigungskrampen (22) aufweist, wobei die Umlenkvertiefungen (21) flach ausgebildet sind.

8. Vorrichtung nach einem der Ansprüche 1 bis 7, **dadurch gekennzeichnet, dass** der Stempel (43) eine ebene Stempelfläche (44) aufweist, insbesondere eine unter einem Winkel auf den Befestigungskrampen (22) auftreffende ebene Stempelfläche (44) aufweist.

9. Vorrichtung nach einem der Ansprüche 1 bis 8, **dadurch gekennzeichnet, dass** der Pressenkopf (1) eine ebene Kontaktfläche zur Anlage am oberen Klammerschenkel (25) der Verbinderklammer (19) aufweist, insbesondere eine unter einem Winkel auf den oberen Klammerschenkel (25) auftreffende ebene Kontaktfläche (45).

10. Vorrichtung nach einem der Ansprüche 1 bis 9, **dadurch gekennzeichnet, dass** der Pressenkopf (1) und das Biegegesenk (2) mittels Zapfen (13) zentrierbar sind, wobei der jeweilige Zapfen (13) längsverschiebbar gelagert ist, insbesondere federgelagert ist.

11. Vorrichtung nach Anspruch 10, **dadurch gekennzeichnet, dass** der Pressenkopf (1) die Zapfen (13), insbesondere zwei Zapfen (13), aufweist, die in Zentrierbohrungen (12) des Biegegesenks (2) einsteckbar sind, wobei der jeweilige Zapfen (13) gegen die Kraft einer Druckfeder (46) federnd im Pressenkopf(1) verschiebbar gelagert ist.

## Claims

1. Device for securing belt fasteners (20) made of joining clips (19) arranged in a row on the belt ends (9) of conveyor belts (10), having a bending press (2) and press head (1) capable of being centred on said bending press with a channel (41) with a stamp (43) capable of being pressed down in the direction of the bending press (2), whereby by means of the stamp (43), fixing staples (22) may be driven through aligned holes (28, 29) in clip legs (18, 25) of the joining clips (19) and while penetrating the belt end (9) inserted between the clip legs (18, 25), such that the points of the fixing staples (22) become folded in the bending press (2), whereby the bending press (2) has means (30) for centring the joining clips (19) such that the means (30) engage between the hinge arches (26) of the joining clips (19) linking the clip legs (18, 25), and in the bending press (2) a rod (31) capable of being pushed into it is mounted, so that the hinge arches (26) of the joining clips (19) enclose it, **characterised in that** the centring of the joining clips (19) by the means (30) for engaging between the hinge arches (26) and by the rod (31) takes place in such a manner that in the process, the rod (31) pushed into the bending press (2) positions the joining clips (19) against the centring means (30) situated between the hinge arches (26).

2. Device according to Claim 1, **characterised in that** the means (30) which engage between the hinge arches (26) are formed as pins (30).

3. Device according to Claim 1 or 2, **characterised in that** the rod (31) is mounted displaceable parallel to the rod axis in the bending press (2).

4. Device according to Claim 3, **characterised in that** positioning means (35) are provided for displacing the rod (31) relative to the bending press (2).

5. Device according to Claim 4, **characterised in that** the rod (31) is held in aligned bore holes of bearing elements (33) displaceable by the positioning means (35), whereby the bearing elements (33) have stops (47) for the belt end (9) laid between the clip legs (18, 25) of the joining clips (19).

6. Device according to one of the claims 1 to 5, **characterised in that** the rod (31) contacts the joining clips (19) at the summit point (32) of the hinge arches (26).

7. Device according to one of the claims 1 to 6, **characterised in that** the bending press (2, 4) has diversion depressions (21) for diverting the tip regions of the fixing staples (22), whereby the diversion depressions (21) are formed flat.

8. Device according to one of the claims 1 to 7, **characterised in that** the stamp (43) has a planar stamp surface (44), particularly a planar stamp surface (44) impinging at an angle on the fixing staple (22).

9. Device according to one of the claims 1 to 8, **characterised in that** the press head (1) has a planar contact surface for placing on the upper clip leg (25) of the joining clip (19), particularly a planar contact surface (45) impinging at an angle on the upper clip leg (25).

10. Device according to one of the claims 1 to 9, **characterised in that** the press head (1) and the bending press (2) may be centred by means of spigots (13), whereby each respective spigot (13) is displaceable longitudinally, particularly spring mounted.

11. Device according to Claim 10, **characterised in that** the press head (1) has the spigots (13), particularly two spigots, (13) that may be inserted in centring bore holes (12) of the bending press (2), whereby the respective spigot (13) is mounted in the press head (1) so as to be displaceable against the force of a compression spring (46).

## Revendications

1. Dispositif pour fixer des raccords de bande (20) formé de pinces de raccord (19) disposées en série sur l'extrémité (9) de bandes transporteuses (10), comprenant une matrice de cintrage (2) et une tête de compression (1) centrée par rapport à celle-ci, avec un canal (41) muni d'un poinçon (43) qui peut s'enfoncer contre la matrice de cintrage (2), le poinçon (43) poussant les agrafes de fixation (22) à travers des orifices alignés (28, 29) dans les branches (18, 25) des pinces de raccord (19) en traversant l'extrémité de bandes (9) glissées entre les branches (18, 25) des pinces, de façon que les pointes des agrafes (22) soient recourbées dans la matrice de cintrage (2),
la matrice de cintrage (2) comportant des moyens (30) pour centrer les pinces de raccord (19) de façon que les moyens (30) pénètrent entre les coudes de charnière (26) reliant les branches (18, 25) et appartenant aux pinces de raccord, avec une tige (31) coulissant dans les coudes placée dans la matrice de cintrage (2) pour être entourée par les coudes de charnière (26) des pinces de raccord (19),
**caractérisé en ce que**
le centrage des pinces de raccord (19) se fait par les moyens (30) pour pénétrer entre les coudes de charnière (26) ainsi que par la tige (31), de façon que la tige (31) glissée dans la matrice de cintrage (2) positionne les pinces de raccord (19) contre les moyens de centrage (30) venant entre les coudes de charnières (26).

2. Dispositif selon la revendication 1,
**caractérisé en ce que**
les moyens (30) qui pénètrent entre les coudes de charnières (26) sont réalisés sous la forme de broches (30).

3. Dispositif selon la revendication 1 ou 2,
**caractérisé en ce que**
la tige (31) est coulissante dans la matrice de cintrage (2) parallèlement à l'axe de cette tige.

4. Dispositif selon la revendication 3,
**caractérisé par**
des moyens de réglage (35) pour coulisser la tige (31) par rapport à la matrice de cintrage (2).

5. Dispositif selon la revendication 4,
**caractérisé en ce que**
la tige (31) est tenue dans des perçages alignés à l'aide d'éléments de palier (33) coulissant par les moyens de réglage (35), et
les éléments de palier (33) comportent des butées (47) pour l'extrémité de bandes (9) placées entre les branches (18, 25) des pinces de raccord (19).

6. Dispositif selon l'une des revendications 1 à 5,
**caractérisé en ce que**
la tige (31) touche les pinces de raccord (19) au sommet (32) des coudes de charnière (26).

7. Dispositif selon l'une des revendications 1 à 6,
**caractérisé en ce que**
la matrice de cintrage (2, 4) comporte des cavités de cintrage (21) pour dévier la zone des pointes des agrafes de fixation (22), les cavités de cintrage (21) étant plates.

8. Dispositif selon l'une des revendications 1 à 7,
**caractérisé en ce que**
le poinçon (43) présente une surface poinçon (44) plane, notamment faisant un angle par rapport aux agrafes de fixation (22).

9. Dispositif selon l'une des revendications 1 à 8,
**caractérisé en ce que**
la tête de compression (1) présente une surface de contact plane pour venir en appui contre la branche supérieure (25) des pinces de raccord (19), en particulier une surface de contact plane (45) rencontrant suivant un angle les branches supérieures (25) des pinces.

10. Dispositif selon l'une des revendications 1 à 9,
**caractérisé en ce que**
la tête de compression (1) et la matrice de cintrage (2) peuvent être cintrées par des broches (13) notamment montées coulissantes longitudinalement et en particulier sous l'action d'un ressort.

11. Dispositif selon la revendication 10,
**caractérisé en ce que**
la tête de compression (1) comporte des broches (13) notamment deux broches (13) qui s'engagent dans des perçages de centrage (12) de la matrice de cintrage (2), la broche (13) respective pouvant coulisser élastiquement dans la tête de compression (1) contre la force développée par un ressort de compression (46).
